# EUROPEAN PATENT SPECIFICATION

(11) **EP 2 615 550 B1**
(45) Date of publication and mention of the grant of the patent: **19.10.2016**
(21) Application number: 11823009.3
(22) Date of filing: 11.05.2011
(51) Int. Cl.: G06F 11/26, G06F 11/22

(54) **MOBILE TERMINAL**
MOBILES ENDGERÄT
TERMINAL MOBILE

(30) Priority: 09.09.2010 CN 201020528732 U
(43) Date of publication of application: 17.07.2013
(73) Proprietor: ZTE Corporation, Shenzhen, Guangdong 518057 (CN)
(72) Inventor: MAO, Yongjin, Shenzhen Guangdong 518057 (CN); JIANG, Fabiao, Shenzhen Guangdong 518057 (CN)
(74) Representative: Modiano, Micaela Nadia
(86) International application number: PCT/CN2011/073930
(87) International publication number: WO 2012/031486

(56) References cited:
- CN-A- 1 504 887
- CN-A- 1 987 808
- CN-A- 101 604 276
- CN-U- 201 789 539
- US-A1- 2003 141 107
- US-A1- 2006 154 526
- US-A1- 2010 207 651

## Description

### Field of the Invention

The application is related to the test technology of mobile terminals, and more particularly to a mobile terminal with a Universal Serial Bus (USB) 2.0 test point.

### Background of the Invention

With the development of society, people have greater demand on mobile terminals, meanwhile, manufacturers of the mobile terminal are facing more and more pressure; therefore, to improve production efficiency and to supply a large quantity of mobile terminal products in a short period have become an important factor of winning victory in the severe market competition for the mobile terminal manufacturers.

During the production process of a mobile terminal, testing USB signal of the mobile terminal is an important process; generally, a method for performing USB signal testing on a mobile terminal comprises: when the mobile terminal is tested, inserting one end of a USB cable into a USB interface of the mobile terminal currently tested and connecting the other end to a test bench computer; when the testing is completed, pulling out the USB cable from the USB interface of the mobile terminal currently tested, and inserting the USB cable into a next mobile terminal to be tested and performing testing. This implementation method needs to insert and pull out the USB cable connected with the mobile terminals continually, which not only wastes a lot of time but also is inconvenient for an assembly line operation, thus the production efficiency is low.

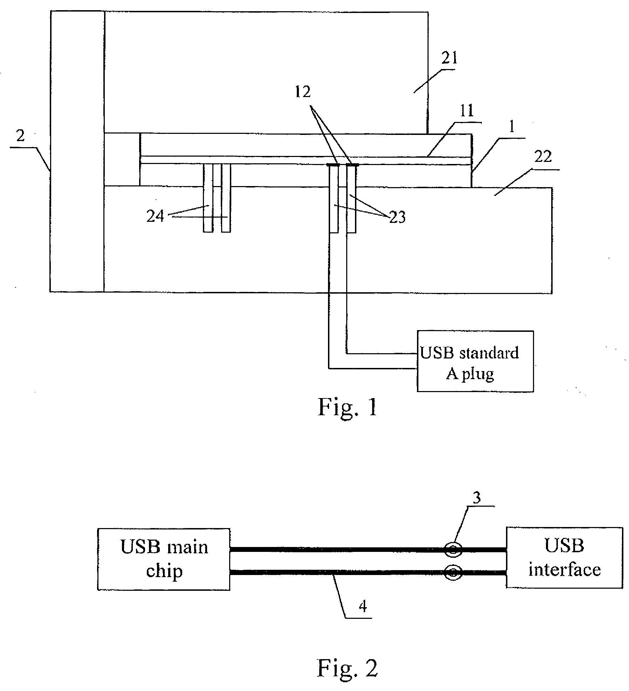

In order to improve the production efficiency, for a mobile terminal adopting USB 1.1, generally, the method of adding a USB signal test point to the mobile terminal and meanwhile adding a USB test probe to a test fixture is adopted to perform production testing on the mobile terminal. In the related art, when a mobile terminal with USB 1.1 is tested, the location relationship between the production test fixture and the mobile terminal is as shown in Fig. 1. In Fig. 1, a production test fixture 2 includes a top 21 and a bottom 22, wherein a USB test probe 23 and other production test probes 24 are arranged on the bottom 22; a mobile terminal 1 includes a Printed Circuit Board (PCB) 11 and a USB signal test point 12.

When a certain mobile terminal 1 is tested, the mobile terminal 1 is placed between the top 21 and the bottom 22 of the product test fixture 2. Meanwhile, the USB test probe 23 of the production test fixture 2 is enabled to contact the USB signal test point 12 of the mobile terminal 1, and the production test fixture 2 is tightly clamped; the other end of the USB test probe 23 is connected to a USB cable, wherein the end of the USB cable is provided with a USB standard plug configured to connect to a test bench computer. When the testing is completed, the mobile terminal 1 is taken out, and a next mobile terminal is tested. This method can avoid inserting/plugging out a USB cable into/from a mobile terminal frequently and save a lot of time; moreover, this method is beneficial for the assembly line operation and effectively improves the production efficiency.

However, with the continuous development of network technology, present mobile terminals mostly adopt the USB 2.0 technology with higher transmission rate to perform production testing, the highest transmission rate of USB 2.0 can reach 480 Mbps. However, if the method of adding a USB signal test point to the mobile terminal, similar to that of the USB 1.1, is adopted to perform production testing, a signal line branch would be formed on the PCB; since the USB 2.0 has an extremely high transmission rate, changes of signal impedance due to the signal line branch caused by addition of a test point would greatly impact the signal transmitted in a high rate, deteriorate signal quality and thus impact the stability of communication. Therefore, the testing carried out by adopting the method of adding a USB signal test point when signals are transmitted by USB 2.0 must have a strict limit on the selection of the test point.

The document US-A-2033141107 relates to the routing of singals on an IC and suggests to keep the stub lines as short as possible by placing than on the periphery of the IC.

### Summary of the Invention

The invention is defined by the device set forth in independent claim 1.

In view of the problems above, the main purpose of the application is to provide a mobile terminal, which can effectively reduce changes of signal quality caused by addition of a USB signal test point and ensure the quality of communication.

In order to achieve the purpose above, the technical solution of the application is realized as follows:
the application provides a mobile terminal, which comprises a USB main chip and a USB interface, wherein the USB interface is configured to connect to an external USB cable, a PCB trace is connected between the USB main chip and the USB interface, a USB 2.0 signal test point is arranged on the PCB trace.

In the solution above, the PCB trace comprises two data lines, and a USB 2.0 signal test point is arranged on either data line.

In the solution above, each USB 2.0 signal test point is arranged right above the data line and is connected with the data line through a PCB via.

In the solution above, the length of the data line between the USB 2.0 signal test point and the USB interface is less than 10mm.

In the solution above, the PCB trace further comprises a power line and a ground line, and a USB 2.0 signal test point is arranged on the power line and the ground line respectively.

In the mobile terminal provided by the application, the USB 2.0 signal test point is arranged on the PCB trace, preferably, when the USB 2.0 signal test point is arranged on the PCB trace serving as a data line, the USB 2.0 signal test point is arranged right above the data line, and the length of the data line between the test point and the USB interface is within 10mm; in this way, the signal line branch caused by the test point is the shortest, thus the changes of signal impedance caused by the signal line branch is very small, the signal quality of USB 2.0 with high transmission rate is least impacted and the stability of signal is very high. Moreover, cooperating the mobile terminal with a USB 2.0 signal test point provided by the application with a production test fixture to perform production testing, the operation of inserting and pulling out a USB cable is avoided, a lot of production testing time is saved, the assembly line operation is easy to implement and the production efficiency of the mobile terminal is improved.

### Brief Description of the Drawings

Fig. 1 shows a diagram of a location relationship between a production test fixture and a mobile terminal during a testing process according to the related art;
Fig. 2 shows a location diagram of a USB 2.0 signal test point in a mobile terminal according to the embodiment of the present application; and
Fig. 3 shows a section diagram of the USB 2.0 signal test point shown in Fig. 2.

### Detailed Description of the Embodiments

The basic idea of the application is that: a USB 2.0 signal test point is arranged on a PCB trace of a mobile terminal; preferably, when the USB 2.0 signal test point is arranged on the PCB trace serving as a data line, the USB 2.0 signal test point is arranged right above the data line, and the length of the data line between the test point and the USB interface is within 10mm.

Fig. 2 shows a location diagram of a USB 2.0 signal test point in a mobile terminal according to the embodiment of the present application. As shown in Fig. 2, the mobile terminal comprises a USB main chip and a USB interface, wherein the USB interface is configured to connect to an external USB cable; the USB main chip is connected with the USB interface through a PCB trace; the PCB trace comprises two data lines, a power line, a ground line and an ID line; generally, no signal test point is arranged on the ID line; a signal test point is arranged on each of the data lines, the power line and the ground line; generally, a USB 2.0 signal test point is arranged on each of the data lines, the power line and the ground line respectively, wherein since only the USB 2.0 signal test point on the data line has an obvious effect on the quality of signal, the application mainly considers limiting the location of the USB 2.0 signal test point added to the data line.

For a clear description, Fig. 2 only shows the data line connected between the USB main chip and the USB interface and the USB 2.0 signal test point arranged on the data line. As shown in Fig. 2, two data lines 4 are connected between the USB main chip and the USB interface, and each data line 4 contains a USB 2.0 signal test point 3.

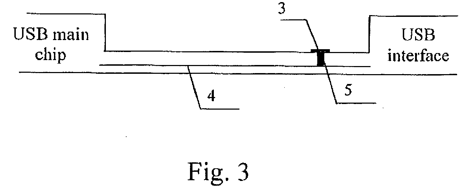

Specifically, Fig. 3 shows a section diagram of the USB 2.0 signal test point shown in Fig. 2; the relationship between the USB 2.0 signal test point 3 and the data line 4 is as shown in Fig. 3; the USB 2.0 signal test point 3 is arranged right above the data line 4, and the USB 2.0 signal test point 3 is connected to the data line 4 through a PCB via 5 to transmit a signal. In order to ensure the quality of signal during signal transmission, the length of the data line between the USB 2.0 signal test point 3 and the USB interface is less than 10mm.

In practical application, when there is no USB 2.0 signal test point 3, the USB 2.0 signal between the USB main chip and the USB interface in the mobile terminal is transmitted along the data line 4, during this process, a signal flow has no branch; after the USB 2.0 signal test point 3 is arranged, two signal transmission branches are added between the USB main chip and the USB interface.

One branch is: when the mobile terminal is connected to an external USB cable through the USB interface, the USB signal would be transmitted to the USB 2.0 signal test point 3 through the PCB via 5, besides transmitting along the data line 4 between the USB main chip and the USB interface; at this moment, the added signal line branch is a PCB via branch.

The other branch is: when a production test fixture is adopted to perform testing on the mobile terminal, the USB 2.0 signal test point 3 contacts a test probe of the production fixture, and the test probe is connected to a test bench computer through a USB cable, the USB signal is transmitted to the USB 2.0 signal test point 3 through the PCB data line 4 and then to the test bench computer through the external USB cable; in addition, the USB signal would be transmitted to the USB interface simultaneously through the data line, at this moment, the added signal line branch is: a data line branch between the USB 2.0 test point 3 and the USB interface.

Based on the design above, since the two signal line branches caused by the arranged USB 2.0 signal test point 3 are shortest, the change of signal impedance caused by the signal line branch is very small, thus, the signal quality of USB 2.0 with high transmission rate is least impacted and the stability of signal is very high.

The above are only the preferred embodiments of the application, and are not intended to limit the scope of protection of the application.

## Claims

1. A mobile terminal, comprising a Universal Serial Bus (USB) main chip and a USB interface, wherein both the USB main chip and the USB interface support USB 2.0 standard, and the USB interface is configured to connect to an external USB cable; a Printed Circuit Board (PCB) trace is connected between the USB main chip and the USB interface; wherein a USB 2.0 signal test point is arranged on the PCB trace,
and wherein, when the USB 2.0 signal test point is arranged on the PCB trace serving as a data line, the USB 2.0 signal test point is arranged right above the data line, and the length of the data line between the test point and the USB interface is within 10 mm.

2. The mobile terminal according to claim 1, **characterized in that** the PCB trace comprises two data lines; and a USB 2.0 signal test point is arranged on either data line.

3. The mobile terminal according to claim 2, **characterized in that** either USB 2.0 signal test point is arranged right above the data line and is connected with the data line through a PCB via.

4. The mobile terminal according to claim 1, **characterized in that** the PCB trace further comprises a power line and a ground line; and a USB 2.0 signal test point is arranged on the power line and the ground line respectively.

## Patentansprüche

1. Ein mobiles Endgerät, das einen universellen seriellen Bus-(USB-)Hauptchip und eine USB-Schnittstelle umfasst, wobei sowohl der USB-Hauptchip als auch die USB-Schnittstelle den USB 2.0-Standard unterstützen und die USB-Schnittstelle für den Anschluss eines externen USB-Kabels konfiguriert ist, wobei eine Leiterplatten-(PCB-)Bahn zwischen dem USB-Hauptchip und der USB-Schnittstelle angeschlossen ist; wobei ein USB 2.0-Signalmesspunkt auf der PCB-Bahn angeordnet ist,
und wobei, wenn der USB 2.0-Signalmesspunkt auf der PCB-Bahn angeordnet ist, die als Datenleitung dient, der USB 2.0-Signalmesspunkt direkt oberhalb der Datenleitung angeordnet ist und die Länge der Datenleitung zwischen dem Messpunkt und der USB-Schnittstelle innerhalb von 10 mm liegt.

2. Das mobile Endgerät gemäß Anspruch 1, **dadurch gekennzeichnet, dass** die PCB-Bahn zwei Datenleitungen umfasst und einen USB 2.0-Signalmesspunkt auf einer der beiden Datenleitungen angeordnet ist.

3. Das mobile Endgerät gemäß Anspruch 2, **dadurch gekennzeichnet, dass** einer der USB 2.0-Signalmesspunkte direkt oberhalb der Datenleitung angeordnet und mit der Datenleitung über ein PCB-Kontaktloch verbunden ist.

4. Das mobile Endgerät gemäß Anspruch 1, **dadurch gekennzeichnet, dass** die PCB-Bahn weiter eine Netzzuleitung und eine Erdleitung umfasst und ein USB 2.0-Signalmesspunkt auf der Netzzuleitung beziehungsweise der Erdleitung angeordnet ist.

## Revendications

1. Terminal mobile, comprenant une puce principale de bus série universel (USB) et une interface USB, dans lequel à la fois la puce principale USB et l'interface USB supportent une norme USB 2.0, et l'interface USB est configurée pour être connectée à un câble USB externe ; une piste de carte de circuit imprimé (PCB) est connectée entre la puce principale USB et l'interface USB ; dans lequel un point de test de signal USB 2.0 est agencé sur la piste de PCB,
et dans lequel, quand le point de test de signal USB 2.0 est agencé sur la piste de PCB servant de ligne de données, le point de test de signal USB 2.0 est agencé juste au-dessus de la ligne de données, et la longueur de la ligne de données entre le point de test et l'interface USB est inférieure à 10 mm.

2. Terminal mobile selon la revendication 1, **caractérisé en ce que** la piste de PCB comprend deux lignes de données ; et un point de test de signal USB 2.0 est agencée sur l'une quelconque des deux lignes de données.

3. Terminal mobile selon la revendication 2, **caractérisé en ce qu'**un point de test de signal USB 2.0 quelconque est agencé au-dessus de la ligne de données et est connecté avec la ligne de données par un via de PCB.

4. Terminal mobile selon la revendication 1, **caractérisé en ce que** la piste de PCB comprend en outre une ligne de puissance et une ligne de terre ; et un point de test de signal USB 2.0 est agencé sur la ligne de puissance et la ligne de terre respectivement.
